(19) Europäisches Patentamt
European Patent Office
Office européen des brevets

(11) **EP 3 047 568 B1**

(12) **EUROPÄISCHE PATENTSCHRIFT**

(45) Veröffentlichungstag und Bekanntmachung des Hinweises auf die Patenterteilung:
**06.02.2019 Patentblatt 2019/06**

(21) Anmeldenummer: **14747651.9**

(22) Anmeldetag: **05.08.2014**

(51) Int Cl.:
***H02P 6/16*** *(2016.01)*

(86) Internationale Anmeldenummer:
**PCT/EP2014/066789**

(87) Internationale Veröffentlichungsnummer:
**WO 2015/036179 (19.03.2015 Gazette 2015/11)**

(54) **VERFAHREN UND VORRICHTUNG ZUM ERKENNEN VON LAGEFEHLERN EINES LÄUFERS EINES ELEKTRONISCH KOMMUTIERTEN STELLANTRIEBS**

METHOD AND DEVICE FOR DETECTING POSITION ERRORS OF A ROTOR OF AN ELECTRONICALLY COMMUTATED ACTUATOR DRIVE

PROCÉDÉ ET DISPOSITIF POUR IDENTIFIER DES ERREURS DE POSITION D'UN ROTOR D'UN MÉCANISME DE COMMANDE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2013 DE 102013218472**

(43) Veröffentlichungstag der Anmeldung:
**27.07.2016 Patentblatt 2016/30**

(73) Patentinhaber: **Robert Bosch GmbH**
**70442 Stuttgart (DE)**

(72) Erfinder:
• **MALCHOW, Florian**
**70176 Stuttgart (DE)**
• **SIEBER, Udo**
**74321 Bietigheim (DE)**
• **SCHWARZMANN, Dieter**
**74081 Heilbronn (DE)**
• **MAUK, Tobias**
**70195 Stuttgart (DE)**
• **ORTSEIFEN, Andreas**
**71706 Markgroeningen (DE)**

(56) Entgegenhaltungen:
**DE-A1-102011 005 566**

## Beschreibung

Technisches Gebiet

Die Erfindung betrifft Stellantriebe, insbesondere Stellantriebe, die als elektronisch kommutierte Elektromotoren ausgebildet sind. Weiterhin betrifft die vorliegende Erfindung Maßnahmen zum Erkennen und Korrigieren von Lagefehlern bei der Positionierung eines Läufers des Stellantriebs.

Stand der Technik

Anstelle von bürstenkommutierten Elektromotoren können für Stellgeberanwendungen auch elektronisch kommutierte Stellantriebe verwendet werden. Im Unterschied zu bürstenkommutierten Stellantrieben erfordern elektronisch kommutierte Stellantriebe für eine präzise Ansteuerung eine Kenntnis der Lage des Läufers. Deshalb reagiert die Ansteuerung elektronisch kommutierter Stellantriebe sehr empfindlich auf Parameterschwankungen und Fehler bei der Erfassung der Läuferlage. Dazu kann entweder ein Lagesensor an dem Läufer angeordnet sein oder die Läuferlage kann mithilfe von strombasierten Lageermittlungsverfahren detektiert werden.

Beispielsweise kann ein Drosselklappenstellgeber mit einem elektronisch kommutierten Stellantrieb ausgestattet sein, um die Lage einer Drosselklappe als Stellglied einstellen zu können. Aus Kostengründen und aus Gründen der Zuverlässigkeit kann dabei auf das Vorsehen eines Sensors zur direkten Erfassung der Läuferlage bzw. zur Erfassung eines Motorstroms verzichtet werden. Stattdessen wird die Läuferlage indirekt durch einen Winkelgeber erfasst, der an der Drosselklappe angeordnet ist, um die Winkellage der Drosselklappe zu detektieren. Da die Drosselklappe über ein untersetzendes Getriebe mit dem Stellantrieb verbunden ist, gestattet eine solche Anordnung lediglich eine sehr ungenaue Läuferlageerfassung mit Unsicherheiten von beispielsweise 15°. Weiterhin ist es notwendig, Läuferlagefehler, die aufgrund von thermischen oder alterungsbedingten Einflüssen auftreten, zu kompensieren.

Aufgrund der ungenauen Zuordnung der Winkellage der Drosselklappe zu der Läuferlage des Stellantriebs ist eine individuelle Kalibrierung notwendig, bei der beispielsweise eine entsprechende Korrekturkennlinie erlernt werden kann. Bisher diesbezüglich vorgeschlagene Verfahren sehen einen zusätzlichen Eingriff in die Ansteuerung des Stellantriebs vor, bei dem der zu stellende Spannungszeiger, der zu einer entsprechenden Läuferlage führt, verstellt wird. Durch den zusätzlichen Eingriff wird der Läufer um einen Fehlwinkel bewegt, der anschließend durch eine etwaige Lageregelung für die Läuferlage ausgeglichen werden muss. Dadurch besteht die Gefahr einer Störung, die zu Instabilitäten der Lageregelung für die Läuferlage führen kann.

Es ist Aufgabe der vorliegenden Erfindung, ein Verfahren und eine Vorrichtung zur Verfügung zu stellen, mit denen bei einem elektronisch kommutierten Stellantrieb ein Fehler bei der Erkennung einer Läuferlage festgestellt werden kann. Insbesondere ist es Aufgabe, dass das Feststellen eines solchen Läuferlagefehlers in einer Weise erfolgt, die möglichst geringe Auswirkungen auf den Betrieb des Stellgebers hat.

Aus der DE 10 2011 005 566 A1 sind ein Verfahren und eine Vorrichtung zum Kalibrieren eines Stellgebersystems mit einem elektronisch kommutierten Stellantrieb bekannt.

Offenbarung der Erfindung

Diese Aufgabe wird durch das Verfahren zum Erkennen eines Lagefehlers eines elektronisch kommutierten Stellantriebs gemäß Anspruch 1 sowie durch die Vorrichtung, das Stellgebersystem und das Computerprogramm gemäß den nebengeordneten Ansprüchen gelöst.

Weitere Ausgestaltungen sind in den abhängigen Ansprüchen angegeben.

Gemäß einem ersten Aspekt ist ein Verfahren zum Erkennen eines Lagefehlers eines elektronisch kommutierten Stellantriebs zwischen einer angenommenen Lage und einer tatsächlichen Lage des Stellantriebs vorgesehen. Das Verfahren umfasst die folgenden Schritte:

- Durchführen einer Lageregelung für die Lage des Stellantriebs;
- Bereitstellen einer Angabe zu der angenommenen Lage des Stellantriebs;
- Aufschalten einer elektrischen Raumzeigergröße, die eine Komponente eines Statormagnetfelds bewirkt, die parallel zu einem bei der angenommenen Lage des Stellantriebs vorliegenden Richtung eines Erregermagnetfelds verläuft; und
- Detektieren, ob aufgrund des Aufschaltens der Komponente des Statormagnetfelds eine Bewegung des Stellantriebs erfolgt ist.

Eine Idee des obigen Verfahrens besteht darin, in einem stationären Zustand des Stellantriebs die Ansteuerung des elektronisch kommutierten Stellantriebs so durchzuführen, dass ein zu dem Erregermagnetfeld paralleles Statormagnetfeld eingeprägt wird, dessen Richtung der Richtung des Erregermagnetfelds der angenommenen Lage entspricht. Da die Richtung des Erregermagnetfelds fest mit der Läuferlage gekoppelt ist, führt eine Abweichung einer tatsächlichen Läuferlage von einer angenommenen Läuferlage zu einer entsprechenden Abweichung zwischen dem tatsächlichen Erregermagnetfeld und dem angenommenen Erregermagnetfeld. Entspricht die angenommene Läuferlage der tatsächlichen Läuferlage, so verläuft das eingeprägte Statormagnetfeld parallel zu dem Erregermagnetfeld und es wird durch das zusätzlich eingeprägte Statormagnetfeld kein diesbezügliches zusätzliches Moment auf den Läufer ausgeübt.

Weicht jedoch die tatsächliche Läuferlage von der angenommenen Läuferlage ab, so wirkt ein Anteil des zusätzlich eingeprägten Statormagnetfelds rechtwinklig zu dem Erregermagnetfeld und ein zusätzliches Stellmoment wird generiert. Dieses zusätzliche Stellmoment kann zu einer Bewegung bzw. Verstellung des Läufers führen, wodurch ein Fehler bei der Erkennung der Läuferlage detektiert werden kann.

Das obige Verfahren zur Erkennung eines Fehlers der Läuferlage hat geringe Auswirkungen auf die Funktion des Stellgebersystems. Insbesondere wenn kein Läuferlagefehler vorliegt, wird keine unerwünschte Bewegung des Stellglieds hervorgerufen. Liegt hingegen ein Läuferlagefehler vor, so führt der Eingriff zu einer Bewegung des Stellglieds, die detektiert werden kann.

Weiterhin kann vorgesehen sein, das zusätzliche Statormagnetfeld gesteuert aufzuschalten und keine Lageregelung des Stellantriebs durchzuführen. Dadurch ist die Gefahr einer Destabilisierung des Stellgebersystems bei gleichzeitigem Betrieb der Regelung und der Aufschaltung des Spannungszeigers, der das zusätzliche Statormagnetfeld hervorruft, ausgeschlossen. Insbesondere kann vorsehen sein, dass der gesteuerte Betrieb nur kurzzeitig und bei deaktivierter Regelung durchgeführt wird.

Weiterhin kann die Komponente des Statormagnetfelds bei deaktivierter Regelung aufgeschaltet werden.

Es kann vorgesehen sein, dass bei Detektieren einer Bewegung des Stellantriebs eine Korrektur der angenommenen Lage des Stellantriebs durchgeführt wird.

Gemäß einer Ausführungsform kann die Korrektur der angenommenen Lage des Stellantriebs durchgeführt werden, wenn das Ausmaß einer Bewegung des Stellantriebs einen vorgegebenen Schwellenwert übersteigt.

Ferner kann nach Vornehmen der Korrektur der angenommenen Lage des Stellantriebs die Lageregelung aktiviert werden.

Insbesondere kann die Korrektur iterativ durch Inkrementieren oder Dekrementieren der angenommenen Lage durchgeführt werden.

Insbesondere kann das obige Verfahren iterativ durchgeführt werden, bis nach einem Aufschalten der Komponente des Statormagnetfelds keine Bewegung des Stellantriebs mehr detektiert wird.

Gemäß einer Ausführungsform kann das Aufschalten der Komponente des Statormagnetfelds gemäß einem vorgegebenen zeitlichen Verlauf, insbesondere einem rampenförmigen Verlauf, durchgeführt werden.

Es kann vorgesehen sein, dass die Lageregelung einen Integratoranteil umfasst, wobei der Integratoranteil beim Deaktivieren der Lageregelung angehalten wird.

Gemäß einem weiteren Aspekt ist eine Vorrichtung zum Erkennen eines Lagefehlers eines elektronisch kommutierten Stellantriebs zwischen einer angenommenen Lage und einer tatsächlichen Lage des Stellantriebs vorgesehen, wobei die Vorrichtung ausgebildet ist, um:

- eine Lageregelung für die Lage des Stellantriebs durchzuführen;
- eine Angabe zu der angenommenen Lage des Stellantriebs bereitzustellen;
- eine Komponente eines Statormagnetfelds aufzuschalten, die parallel zu einer bei der angenommenen Lage des Stellantriebs vorliegenden Richtung eines Erregermagnetfelds verläuft; und
- zu detektieren, ob aufgrund des Aufschaltens der Komponente des Statormagnetfelds eine Bewegung des Stellantriebs erfolgt ist.

Gemäß einem weiteren Aspekt ist ein Stellgebersystem vorgesehen, umfassend:

- einen elektronisch kommutierten Stellantrieb;
- ein mit dem Stellantrieb gekoppeltes Stellglied;
- einen Stellungsdetektor zum Ermitteln einer Lage des Stellantriebs; und
- die obige Vorrichtung.

Kurzbeschreibung der Zeichnungen

Bevorzugte Ausführungsformen werden nachfolgend anhand der beigefügten Zeichnungen näher erläutert. Es zeigen:

Figur 1   eine schematische Darstellung eines Stellgebersystems mit einem elektronisch kommutierten Stellantrieb;

Figur 2   ein Flussdiagramm zur Veranschaulichung des Verfahrens zum Erkennen eines Fehlers bei der Erkennung der Läuferlage; und

Figur 3   ein Diagramm zur Veranschaulichung von Spannungszeigern in einem rotorfesten Koordinatensystem bei Auftreten eines Fehlers bei der Erkennung der Läuferlage.

Beschreibung von Ausführungsformen

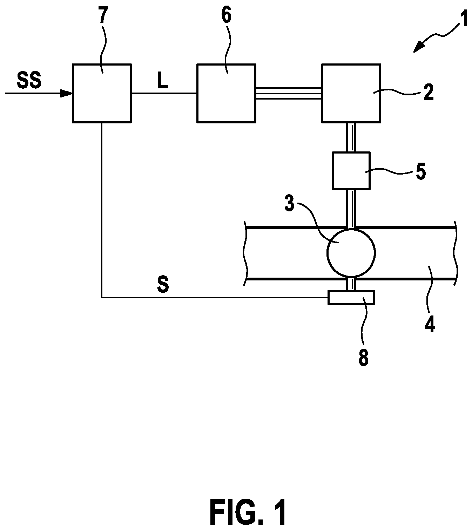

Figur 1 zeigt eine schematische Darstellung eines Stellgebersystems 1, insbesondere eines Drosselklappenstellgebers, für ein Frischluftansaugsystem eines Motorsystems mit einem Verbrennungsmotor (nicht gezeigt). Das Stellgebersystem 1 umfasst einen Stellantrieb 2, der als ein rotatorischer, elektronisch kommutierter Elektromotor ausgebildet sein kann. Der Stellantrieb 2 dient zum Stellen eines Stellglieds 3, das in dem gezeigten Ausführungsbeispiel als eine Drosselklappe in einem Ansaugrohr 4 ausgebildet ist.

Das Stellglied 3 kann gedreht, geschwenkt bzw. in sonstiger Weise gestellt werden. Im Fall einer Klappe als Stellglied 3 bewirkt ein Verschwenken, dass ein Öffnungsquerschnitt in dem Ansaugrohr 4 variiert wird. Zum Betreiben des Stellglieds 3 ist der Stellantrieb 2 mit diesem über ein Getriebe 5 gekoppelt, das eine Getriebeübersetzung aufweist. Im vorliegenden Ausführungsbeispiel ist die Klappe als Stellglied 3 für eine Verschwenkbewegung in einem Winkelbereich von ca. 90° vorgesehen. Diese Verschwenkbewegung des Stellglieds 3 wird durch eine Anzahl von Umdrehungen eines Läufers bzw. Rotors (nicht gezeigt) des Stellantriebs 2 erreicht. Das heißt, eine Drehung des Läufers des Stellantriebs 2 ergibt eine Verstellung des Stellglieds 3 um einen bestimmten Winkel, der sich aus der Getriebeübersetzung des Getriebes 5 ergibt.

Der Stellantrieb 2 umfasst einen elektronisch kommutierten Elektromotor, insbesondere eine dreiphasige elektrische Maschine, die von einer Treiberschaltung 6 angesteuert wird. Die Treiberschaltung 6 generiert Phasenspannungen für den Stellantrieb 2, um dem Stellantrieb 2 einen Spannungszeiger (Raumzeiger) vorzugeben, der zumindest im stationären Fall zu einer Ausrichtung des Läufers entsprechend dem vorgegebenen Raumzeiger führt. Der Spannungszeiger führt zu einer Ausbildung eines zu dem Raumzeiger parallelen Statormagnetfelds. Das Erregermagnetfeld, das üblicherweise von durch Permanentmagnete im Läufer bewirkten Läuferpolen erzeugt wird und dessen Richtung durch Bewegung des Läufers variiert, richtet sich entsprechend der Richtung des Statormagnetfelds aus.

Der Spannungszeiger ist durch eine Amplitude (Spannungshöhe) und eine Raumzeigerrichtung definiert. Der durch die Phasenspannungen vorgegebene Raumzeiger wird basierend auf einer Lagestellgröße L von einer Steuereinheit 7 generiert. In der Treiberschaltung 6 kann dazu ein Kommutierungsverfahren implementiert sein, das den Raumzeiger durch Anlegen der Phasenspannungen entsprechend einem Kommutierungsmuster bereitstellt.

Die Steuereinheit 7 ist mit einem Stellungsdetektor 8 verbunden, der nahe dem Stellglied 3 angeordnet ist und eine Stellungsangabe S über die Stellung des Stellglieds 3 bereitstellt. Die Funktion des Stellungsdetektors 8 kann auf optischen, magnetischen oder ähnlichen Messverfahren basieren. In der Regel weist der Stellungsdetektor 8 ein Geberrad auf, das mit dem Stellglied 3 gekoppelt ist, sowie einen Sensor, der eine Bewegung des Geberrads detektiert und ein entsprechendes Lageänderungssignal ausgibt. Das Lageänderungssignal kann dann in dem Stellungsdetektor 8 z. B. durch Akkumulierung in die Stellungsangabe S umgesetzt werden. Alternativ kann der Sensor die absolute Lage des Stellglieds 3 direkt als Stellungsangabe S angeben.

Basierend auf der Stellungsangabe S für die Stellung des Stellglieds 3 führt die Steuereinheit 7 eine Lageregelung aus, die als Stellgröße die an die Treiberschaltung 6 kommunizierte Lagestellgröße L bereitstellt. Die Lageregelung kann entsprechend einer herkömmlichen Lageregelung basierend auf einer extern vorgegebenen Sollstellung SS ausgebildet sein und einen Proportionalanteil und/oder einen Differentialanteil und/oder einen Integralanteil umfassen. Die Lageregelung kann als eine Stellgröße einen Raumzeiger ermitteln, der in Phasenspannungen umgesetzt wird, um so ein entsprechend gerichtetes Statormagnetfeld auszubilden. Der Läufer des Stellantriebs 2 richtet sich entsprechend dem gerichteten Magnetfeld aus.

In einer alternativen Ausgestaltung kann die Lageregelung jedoch auch einen anliegenden Raumzeiger inkrementell in Amplitude und/oder Richtung ändern, ohne dass eine Stellgröße bestimmt wird, die eine absolute Stellung des Raumzeigers vorgibt. In diesem Fall kann eine Stellung aus den von der Treiberschaltung 6 angelegten Phasenspannungen zurückgerechnet werden.

Bei der Ansteuerung des elektronisch kommutierten Stellantriebs 2 ergeben sich für das Motormoment folgende Beziehungen:

$$U_d = RI_d - L_q I_q \omega_{el}$$

$$U_q = RI_q + L_d I_d \omega_{el} + K_m \omega_{el}$$

$$M = \frac{3}{2} N I_q \left[ K_m + \left( L_d - L_q \right) I_d \right]$$

wobei $U_d$ und $U_q$ den Spannungen im Stator des elektronisch kommutierten Stellantriebs 2 in d- bzw. q-Richtung eines läuferfesten Koordinatensystems, $I_d$ und $I_q$, den Motorströmen bezüglich dieses Koordinatensystems, $\omega_{el}$ der elektrischen Drehzahl des Läufers und M dem Drehmoment entsprechen. Die als konstant angenommenen Parameter $L_d$ und $L_q$ entsprechen den Induktivitäten bezüglich des läuferfesten Koordinatensystems. R bezeichnet den ohmschen Strangwiderstand der Statorwicklung und N gibt die Polpaarzahl des elektronisch kommutierten Stellantriebs 2 an. $K_m$ entspricht einer in der Regel empirisch ermittelten Motorkonstanten. Die d-Richtung des läuferfesten Koordinatensystems gibt die Richtung des Erregermagnetfelds und die q-Richtung entsprechend eine Richtung rechtwinklig zur d-Richtung des läuferfesten Koordinatensystems an.

Bei stillstehendem Stellantrieb 2 und bei Verwendung einer Vollpolmaschine gilt:

$$\omega_{el} = 0 \; und \; L_d = L_q.$$

Unter diesen Randbedingungen lassen sich die Gleichungen vereinfachen zu:

$$U_d = RI_d$$

$$U_q = RI_q$$

$$M = \frac{3}{2} NI_q K_m$$

Im lageregelten Betrieb ergeben sich durch die Kommutierungsstrategie bei eingeschwungenem stillstehendem Motor ein verschwindender Strom in d-Richtung und somit auch eine verschwindende Spannung in d-Richtung

$$I_d = 0 \; und \; U_d = 0$$

sowie eine von der Regelung als Stellgröße bereitgestellte Spannung in q-Richtung, die ein gerade zum Halten der Drosselklappe 3 an der aktuellen Position ausreichendes Motormoment erzeugt. Dieses Motormoment kann 0 Nm betragen. Im Fall, dass der Stellantrieb 2 mit einer (nicht gezeigten) Rückstellfeder gekoppelt ist, entspricht das Motormoment dem durch die Federkraft bewirkten Federmoment.

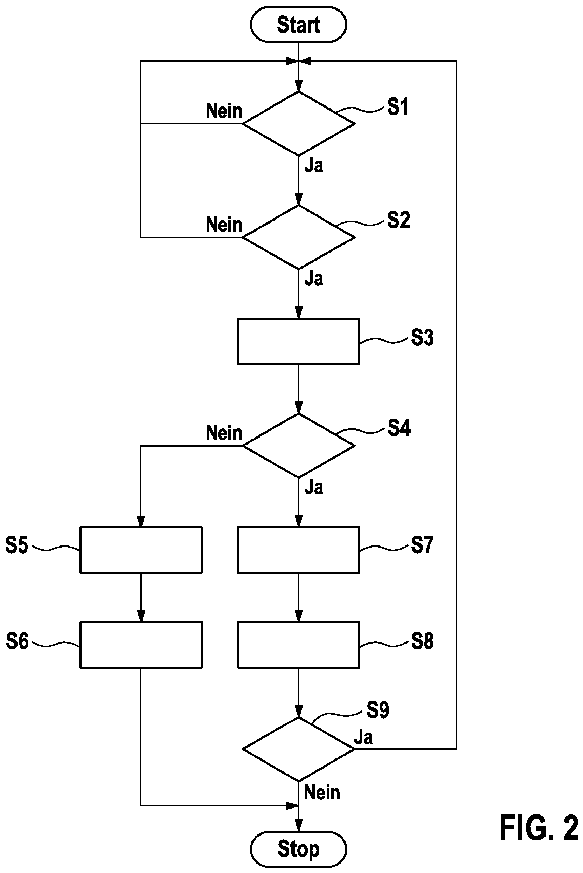

In Figur 2 ist ein Flussdiagramm zur Veranschaulichung des Verfahrens zum Erkennen eines Fehlers der angenommenen Läuferlage des Läufers des Stellantriebs 2 dargestellt. In Schritt S1 wird zunächst überprüft, ob sich die Lageregelung, die in der Steuereinheit 7 realisiert ist, im eingeschwungenen Zustand befindet. Dies kann mithilfe des Stellungsdetektors 8 festgestellt werden. Sobald der Stellungsdetektor 8 detektiert, dass das Stellglied 3 stillsteht, d.h. keine Änderung der Stellung des Stellglieds 3 auftritt, wird der eingeschwungene Zustand festgestellt. Wird festgestellt, dass ein eingeschwungener Zustand angenommen ist (Alternative: Ja), so wird das Verfahren mit Schritt S2 fortgesetzt; andernfalls (Alternative: Nein) wird zu Schritt S1 zurückgesprungen.

In Schritt S2 wird überprüft, ob das Stellglied 3 auch während einer vorgegebenen Zeitdauer von beispielsweise wenigen Zehntel Sekunden bis zu mehrere Sekunden im eingeschwungenen Zustand verbleibt. Ist dies der Fall (Alternative: Ja), so wird das Verfahren mit Schritt S3 fortgesetzt, andernfalls (Alternative: Nein) wird das Verfahren mit Schritt S1 neu begonnen und erneut auf das Vorliegen eines eingeschwungenen Zustands gewartet.

In Schritt S3 wird eine aktive Lageregelung deaktiviert und es wird bezüglich eines läuferfesten Koordinatensystems, das auf einer angenommenen Läuferlage basiert (angenommenes Koordinatensystem), die Spannung $U_d$ in d-Richtung auf einen Spannungsvorgabewert $U_d^*$ gestellt. Entspricht die angenommene Läuferlage der tatsächlichen Läuferlage, so war die Spannung in d-Richtung zuvor 0 Volt. Das Vorzeichen des Spannungsvorgabewerts $U_d^*$ in d-Richtung kann beliebig gewählt werden.

Die anliegende Spannung in q-Richtung wird während dieser Zeit konstant gehalten. Die Spannung in q-Richtung beträgt 0 V bei Systemen ohne eine auf das Stellglied 3 wirkende Rückstellkraft, während bei Systemen mit Rückstellfeder die Spannung in q-Richtung einem Wert entspricht, der ein Drehmoment des Läufers bewirkt, das dem dazu entgegengesetzten Fehlermoment entgegenwirkt. Entspricht die angenommene Läuferlage der tatsächlichen Läuferlage, so wird durch das Beaufschlagen der Spannung in die Richtung mit dem Spannungsvorgabewert $U_d^*$ das durch den Stellantrieb 2 bewirkte Moment nominell nicht verändert, sondern es nimmt lediglich die Stromaufnahme zu. Daher ist bei korrekter Läuferlageinformation keine Auswirkung auf das Stellglied 3 zu erwarten.

In Schritt S4 wird überprüft, ob innerhalb einer bestimmten vorgegebenen zweiten Zeitdauer seit dem Anlegen des Spannungsvorgabewerts $U_d^*$ in d-Richtung (bezüglich der angenommenen Läuferlage) eine Bewegung des Stellglieds 3 und damit eine Bewegung des Läufers aufgetreten ist.

Ist keine Bewegung des Stellglieds 3 aufgetreten (Alternative: Nein), so liegt kein Fehler bei der Ermittlung der Läuferlage vor, d. h. die zuvor angenommene Läuferlage entspricht der tatsächlichen Läuferlage, oder es der Fehler ist so gering, dass dieser lediglich ein Moment bewirkt, das kleiner ist als eine Haftreibung des Läufers. Dies kann in Schritt S5 in geeigneter Weise signalisiert werden.

Anschließend kann in Schritt S6 die Lageregelung für die Läuferlage aktiviert und das Stellglied 3 regulär angesteuert werden.

Wird jedoch in Schritt S4 festgestellt, dass seit bzw. aufgrund der Ansteuerung der Statorwicklung, so dass eine Spannung in d-Richtung dem Spannungsvorgabewert $U_d^*$ entspricht, eine Bewegung des Stellglieds 3 aufgetreten ist (Alternative: Ja), so wird in Schritt S7 eine Korrektur durchgeführt. Die Korrektur erfolgt mithilfe eines Korrekturwertes, der abhängig von dem Vorzeichen des Fehlers der Läuferlage ermittelt werden kann. Das Vorzeichen des Fehlers der Läuferlage ergibt sich aus der beobachteten Bewegungsrichtung des Stellglieds 3 und dem Vorzeichen des Spannungsvorgabewerts $U_d^*$ in d-Richtung. Der Korrekturwert kann beispielsweise durch Inkrementierung oder Dekrementierung abhängig von dem Vorzeichen des Fehlers der Läuferlage und dem Vorzeichen des Vorgabewerts der Spannung in d-Richtung iterativ (um einen vorgegebenen Betrag) angepasst werden. Insbesondere kann der Korrekturwert einem Läuferlage-Offset-Wert entsprechen. Das heißt, der Korrekturwert kann zu der aus dem Stellungsdetektor 8 ermittelten Läuferlage addiert bzw. von dieser subtrahiert und das Ergebnis als die neue angenommene Läuferlage verwendet werden.

Die iterative Anpassung des Korrekturwerts schließt Fehlanpassungen, die auf die Geschwindigkeit oder Gradienten der Bewegung des Stellglieds 3 abstellen, aufgrund von Haftreibungseinflüssen aus. Weiterhin kann alternativ, z.B. bei Systemen mit sehr geringer Haftreibung, vorgesehen sein, dass die Korrektur des Korrekturwerts bei kleinen Läuferlagefehlern, d. h. bei geringen Bewegungen des Läufers, aufgrund des Anlegens des Vorgabewerts der Spannung der d-Richtung unterbunden wird, da sehr geringe Fehler der Läuferlage toleriert werden können. Grundsätzlich ist die Wahl des Vorzeichens des Vorgabewerts beliebig, diese kann jedoch alternierend erfolgen.

Wegen möglicher geringer Bewegungen des Stellglieds 3 durch äußere Einflüsse sowie wegen möglichen Rauschens des Stellungsdetektors 8 sollte bei der Detektion einer Bewegung des Stellglieds 3 ein Schwellenwert für eine notwendige Änderung des Sensorsignals des Stellungsdetektors 8 verwendet werden, der zur Detektion einer Bewegung des Stellglieds 3 ausgewertet wird.

Anschließend wird die Lageregelung in Schritt S8 wieder gestartet.

In Schritt S9 wird gemäß einem Abbruchkriterium überprüft, ob eine weitere Korrektur erforderlich ist. Wird festgestellt, dass keine weitere Korrektur erforderlich ist (Alternative: Nein), so wird das Verfahren beendet. Andernfalls (Alternative: Ja) wird zu Schritt S1 zurückgesprungen, um das zuvor beschriebene Verfahren erneut durchzuführen,.

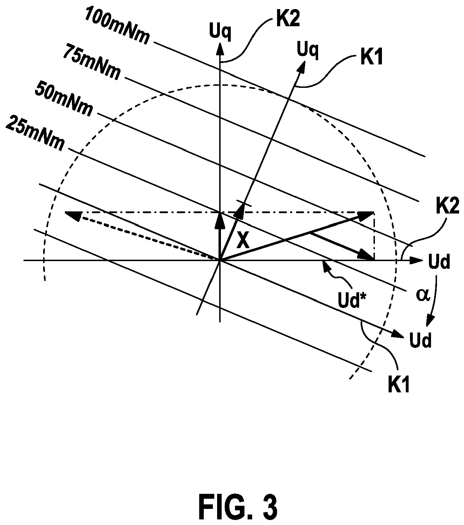

In Figur 3 ist zur Veranschaulichung das läuferfeste Koordinatensystem K1 für die tatsächliche Läuferlage und das läuferfeste Koordinatensystem für die angenommene Läuferlage bei einem Erkennungsfehler $\alpha$ der Läuferlage (Winkel) dargestellt. Man erkennt, dass ein bezüglich des läuferfesten Koordinatensystems K2 der angenommenen Läuferlage angelegter Spannungsvorgabewert $U_d{}^*$ in d-Richtung zu einem Anteil X der Spannung in q-Richtung im läuferfesten Koordinatensystem K1 der tatsächlichen Läuferlage führt, dessen Höhe sich aus der Größe des Erkennungsfehlers $\alpha$ zwischen der tatsächlichen und angenommenen Läuferlage ergibt.

Beim Deaktivieren der Regelung ist es bei Verwendung eines Integralanteils erforderlich, den Integrator anzuhalten, damit die Reglerzustände unverändert bleiben. Auf diese Weise kann ein Wind-Up-Effekt ausgeschlossen werden.

Weiterhin kann vorgesehen sein, das Anlegen des Spannungsvorgabewerts $U_d{}^*$ in d-Richtung gemäß Schritt S3 nicht sprunghaft, sondern gemäß einem vorgegebenen Verlauf, insbesondere einem rampenförmigen Verlauf, durchzuführen. Dadurch können sehr starke Bewegungen durch hohe Spannungsvorgabewerte Ud* bei großen Abweichungen zwischen angenommener und wirklicher Läuferlage vermieden werden und es kann zudem die Stromaufnahme des Stellgebersystems 1 reduziert werden, da, sobald eine Bewegung des Stellglieds 3 festzustellen ist, die Manipulation der Spannung in d-Richtung gestoppt werden kann, da die Fehlerkorrektur iterativ erfolgt.

## Patentansprüche

1. Verfahren zum Erkennen eines Lagefehlers eines elektronisch kommutierten Stellantriebs (2) zwischen einer angenommenen Lage und einer tatsächlichen Lage des Stellantriebs (2), umfassend die folgenden Schritte:

   - Durchführen einer Lageregelung für die Lage des Stellantriebs (2);
   - Bereitstellen einer Angabe zu der angenommenen Lage des Stellantriebs (2);
   - Aufschalten (S3) einer elektrischen Raumzeigergröße (Ud*), die eine Komponente (X) eines Statormagnetfelds bewirkt, die parallel zu einer bei der tatsächlichen Lage des Stellantriebs (2) vorliegenden Richtung (K1) eines Erregermagnetfelds verläuft; und
   - Detektieren (S4), ob aufgrund des Aufschaltens der Raumzeigergröße (Ud*) des Statormagnetfelds eine Bewegung des Stellantriebs (2) erfolgt ist.

2. Verfahren nach Anspruch 1, wobei die Komponente des Statormagnetfelds bei deaktivierter Regelung aufgeschaltet wird.

3. Verfahren nach Anspruch 1 oder 2, wobei bei Detektieren einer Bewegung des Stellantriebs (2) eine Korrektur der angenommenen Lage des Stellantriebs (2) durchgeführt wird.

4. Verfahren nach Anspruch 3, wobei die Korrektur der angenommenen Lage des Stellantriebs (2) durchgeführt wird, wenn das Ausmaß einer Bewegung des Stellantriebs (2) einen vorgegebenen Schwellenwert übersteigt.

5. Verfahren nach einem der Ansprüche 3 und 4, wobei nach Vornehmen der Korrektur der angenommenen Lage des Stellantriebs (2) die Lageregelung aktiviert wird.

6. Verfahren nach einem der Ansprüche 3 bis 5, wobei die Korrektur iterativ durch Inkrementieren oder Dekrementieren der angenommenen Lage durchgeführt wird.

7. Verfahren nach einem der Ansprüche 1 bis 6, wobei das Verfahren iterativ durchgeführt wird, bis nach einem Aufschalten der Komponente des Statormagnetfelds keine Bewegung des Stellantriebs (2) mehr detektiert wird.

8. Verfahren nach einem der Ansprüche 1 bis 7, wobei das Aufschalten der Komponente des Statormagnetfelds gemäß einem vorgegebenen zeitlichen Verlauf, insbesondere einem rampenförmigen Verlauf, durchgeführt wird.

**9.** Verfahren nach einem der Ansprüche 1 bis 8, wobei die Lageregelung einen Integratoranteil umfasst, wobei der Integratoranteil beim Deaktivieren der Lageregelung angehalten wird.

**10.** Verfahren nach einem der Ansprüche 1 bis 9, wobei die angenommene Lage des Stellantriebs (2) bei Detektieren einer Bewegung durch Inkrementieren oder Dekrementieren iterativ angepasst wird.

**11.** Vorrichtung, insbesondere eine Steuereinheit (7), zum Erkennen eines Lagefehlers eines elektronisch kommutierten Stellantriebs (2) zwischen einer angenommenen Lage und einer tatsächlichen Lage des Stellantriebs (2), wobei die Vorrichtung ausgebildet ist, um:

- eine Lageregelung für die Lage des Stellantriebs (2) durchzuführen;
- eine Angabe zu der angenommenen Lage des Stellantriebs (2) bereitzustellen;
- eine Raumzeigergröße (Ud*) eines Statormagnetfelds aufzuschalten, die eine Komponente (X) des Statormagnetfeldes bewirkt, die parallel zu einer bei der tatsächlichen Lage des Stellantriebs (2) vorliegenden Richtung (K1) eines Erregermagnetfelds verläuft; und
- zu detektieren, ob aufgrund des Aufschaltens der Raumzeigergröße (Ud*) des Statormagnetfelds eine Bewegung des Stellantriebs (2) erfolgt ist.

**12.** Stellgebersystem (1) umfassend:

- einen elektronisch kommutierten Stellantrieb (2);
- ein mit dem Stellantrieb (2) gekoppeltes Stellglied (3);
- einen Stellungsdetektor (8) zum Ermitteln einer Lage des Stellantriebs (2); und
- die Vorrichtung nach Anspruch 12.

**13.** Computerprogramm, welches dazu eingerichtet ist, alle Schritte des Verfahrens nach einem der Ansprüche 1 bis 10 auszuführen.

**14.** Elektronisches Speichermedium, auf welchem ein Computerprogramm nach Anspruch 13 gespeichert ist.

**15.** Elektronische Steuereinheit, welche ein elektronisches Speichermedium nach Anspruch 14 aufweist.

**Claims**

**1.** Method for detecting a position error of an electronically commutated actuator drive (2) between an assumed position and an actual position of the actuator drive (2), said method including the following steps:

- Perform a position control procedure for the position of the actuator drive (2);
- Provide data with regard to the assumed position of the actuator drive (2);
- Generate (S3) an electric space vector value (Ud*) that generates a component (X) of a stator magnetic field that extends parallel with a direction (K1) of an exciter magnetic field that prevails in the case of the actual position of the actuator drive (2); and
- Detect (S4) whether a movement of the actuator drive (2) has occurred as a result of generating the space vector value (Ud*) of the stator magnetic field.

**2.** Method according to Claim 1, wherein the component of the stator magnetic field is generated in the case of a deactivated control procedure.

**3.** Method according to Claim 1 or 2, wherein in the case of a movement of the actuator drive (2) being detected the assumed position of the actuator drive (2) is corrected.

**4.** Method according to Claim 3, wherein the assumed position of the actuator drive (2) is corrected if the extent of a movement of the actuator drive (2) exceeds a predetermined threshold value.

**5.** Method according to either one of Claims 3 and 4, wherein the position control procedure is activated after the assumed position of the actuator drive (2) has been corrected.

**6.** Method according to any one of Claims 3 to 5, wherein the correction is performed in an iterative manner by means of incrementing or decrementing the assumed position.

**7.** Method according to any one of Claims 1 to 6, wherein the method is performed in an iterative manner until no further movement of the actuator drive (2) is detected after the component of the stator magnetic field has been generated.

**8.** Method according to any one of Claims 1 to 7, wherein the component of the stator magnetic field is generated in accordance with a predetermined progression with respect to time, in particular in accordance with a ramp-shaped progression.

9. Method according to any one of Claims 1 to 8, wherein the position control procedure comprises an integrator part, wherein the integrator part is stopped as the position control procedure is deactivated.

10. Method according to any one of Claims 1 to 9, wherein in the case of a movement being detected the assumed position of the actuator drive (2) is adjusted in an iterative manner by means of incrementation or decrementation.

11. Device, in particular a control unit (7), for detecting a position error of an electronically commutated actuator drive (2) between an assumed position and an actual position of the actuator drive (2), wherein the device is embodied so as to:

- Perform a position control procedure for the position of the actuator drive (2);
- Provide data with regard to the assumed position of the actuator drive (2);
- Generate a space vector value (Ud*) of a stator magnetic field that generates a component (X) of the stator magnetic field that extends parallel with a direction (K1) of an exciter magnetic field that prevails in the case of the actual position of the actuator drive (2); and
- To detect whether a movement of the actuator drive (2) has occurred as a result of generating the space vector value (Ud*) of the stator magnetic field.

12. Positioning system (1) comprising:

- An electronically commutated actuator drive (2) ;
- An actuator (3) that is coupled to the actuator drive (2);
- A position detector (8) for ascertaining a position of the actuator drive (2); and
- the device according to Claim 12.

13. Computer program that is embodied so as to implement all the steps of the method according to any one of Claims 1 to 10.

14. Electronic storage medium on which a computer program according to Claim 13 is stored.

15. Electronic control unit that comprises an electronic storage medium according to Claim 14.

**Revendications**

1. Procédé de détection d'une erreur de position d'un entraînement de réglage (2) commuté électroniquement entre une position supposée et une position effective de l'entraînement de réglage (2), le procédé comportant les étapes suivantes :

exécution d'une régulation de la position de l'entraînement de réglage (2),
préparation d'une donnée concernant la position supposée de l'entraînement de réglage (2),
application (S3) d'une grandeur vectorielle électrique (Ud*) qui produit une composante (X) d'un champ magnétique de stator parallèle à une direction (K1) d'un champ magnétique d'excitation, qui prévaut lorsque l'entraînement de réglage (2) est en position effective et
vérification (S4) qu'un déplacement de l'entraînement de réglage (2) a eu lieu sur la base de l'application de la grandeur vectorielle (Ud*) du champ magnétique de stator.

2. Procédé selon la revendication 1, dans lequel la composante du champ magnétique de stator est appliquée lorsque la régulation est désactivée.

3. Procédé selon les revendications 1 ou 2, dans lequel une correction de la position supposée de l'entraînement de réglage (2) est réalisée lorsqu'un déplacement de l'entraînement de réglage (2) est détecté.

4. Procédé selon la revendication 3, dans lequel la correction de la position supposée de l'entraînement de réglage (2) est exécutée si l'amplitude d'un déplacement de l'entraînement de réglage (2) dépasse une valeur de seuil prédéterminée.

5. Procédé selon l'une des revendications 3 et 4, dans lequel la régulation de position est activée après que la correction de la position supposée de l'entraînement de réglage (2) a été réalisée.

6. Procédé selon l'une des revendications 3 à 5, dans lequel la correction est réalisée itérativement par incrémentation ou décrémentation de la position supposée.

7. Procédé selon l'une des revendications 1 à 6, dans lequel le procédé est réalisé itérativement jusqu'à ce qu'aucun déplacement de l'entraînement de réglage (2) ne soit plus détecté après une application de la composante du champ magnétique de stator.

8. Procédé selon l'une des revendications 1 à 7, dans lequel l'application de la composante du champ magnétique de stator est réalisée selon une évolution temporelle prédéterminée et en particulier une évolution en forme de rampe.

9. Procédé selon l'une des revendications 1 à 8, dans lequel la régulation de position comporte une partie d'intégrateur, la partie d'intégrateur étant conservée lors de la désactivation de la régulation de position.

10. Procédé selon l'une des revendications 1 à 9, dans lequel la position supposée de l'entraînement de réglage (2) est adaptée itérativement par incrémentation ou décrémentation lors de la détection d'un déplacement.

11. Ensemble, en particulier unité de commande (7), destiné à détecter une erreur de position d'un entraînement de réglage (2) commuté électroniquement entre une position supposée et une position effective de l'entraînement de réglage (2), l'ensemble étant configuré pour :

> exécuter une régulation de la position de l'entraînement de réglage (2),
> préparer une donnée concernant la position supposée de l'entraînement de réglage (2),
> appliquer une grandeur vectorielle (Ud*) d'un champ magnétique de stator qui a pour effet une composante (X) de champ magnétique de stator parallèle à une direction (K1) d'un champ magnétique d'excitation, qui prévaut lorsque l'entraînement de réglage (2) est en position effective et
> détecter si un déplacement de l'entraînement de réglage (2) a eu lieu sur la base de l'application de la grandeur vectorielle (Ud*) du champ magnétique de stator.

12. Système (1) d'émetteur de réglage comprenant :

> un entraînement de réglage (2) commuté électroniquement,
> un organe de réglage (3) accouplé à l'entraînement de réglage (2),
> un détecteur de position (8) qui détermine la position de l'entraînement de réglage (2) et l'ensemble selon la revendication 12.

13. Programme informatique conçu pour mettre en oeuvre toutes les étapes du procédé selon l'une des revendications 1 à 10.

14. Support de mémoire électronique sur lequel un programme informatique selon la revendication 13 est conservé.

15. Unité de commande électronique qui présente un support électronique de mémoire selon la revendication 14.

**FIG. 1**

FIG. 2

**FIG. 3**

**EP 3 047 568 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011005566 A1